# EUROPÄISCHE PATENTSCHRIFT

(11) **EP 3 727 957 B1**
(45) Veröffentlichungstag und Bekanntmachung des Hinweises auf die Patenterteilung: **11.01.2023**
(21) Anmeldenummer: 18793386.6
(22) Anmeldetag: 18.10.2018
(51) Int. Cl.: B60S 1/38, B60S 1/40, B60S 1/52

(54) **SCHEIBENWISCHERVORRICHTUNG**
WINDSHIELD WIPER DEVICE
DISPOSITIF D'ESSUIE-GLACE

(30) Priorität: 19.12.2017 DE 102017223140
(43) Veröffentlichungstag der Anmeldung: 28.10.2020
(73) Patentinhaber: Robert Bosch GmbH, 70442 Stuttgart (DE)
(72) Erfinder: TERENTIC, Andrija, 11000 Belgrade (RS); WOLFGARTEN, Sven, 77815 Buehl (DE); RAPP, Harald, 77815 Buehl (DE); GEISSLER, Sascha, 77839 Lichtenau (DE); KRAEMER, Godelieve, 76549 Huegelsheim (DE); KRUSE, Michael, 76547 Sinzheim (DE); BOSNIC, Tanja, 11080 Belgrade (RS); CIRKOVIC, Nikola, 11080 Belgrade (RS); BRATEC, Herve, 3012 Wilsele (BE); KRAEMER, Hendrik, 77815 Buehl (DE); JOCIC, Najdan, 26000 Pancevo (RS)
(86) Internationale Anmeldenummer: PCT/EP2018/078568
(87) Internationale Veröffentlichungsnummer: WO 2019/120685

(56) Entgegenhaltungen:
- EP-A1- 3 231 673
- DE-A1-102008 049 270
- DE-A1-102009 043 694
- DE-A1-102010 007 557
- US-A- 5 676 868

## Beschreibung

### Stand der Technik

Es ist bereits eine Scheibenwischervorrichtung für einen Scheibenwischer, mit zumindest einem Wischarmadapter, mit zumindest einem Wischblattadapter und mit einer Heizeinheit zum Heizen eines Wischblatts und einer Sprüheinheit zu einem Aufsprühen eines Waschfluids auf eine Fahrzeugscheibe, wobei die Sprüheinheit und die Heizeinheit zumindest teilweise in dem Wischblattadapter angeordnet sind, vorgeschlagen worden DE 10 2008 049 270 A1 offenbart den Oberbegriff des Anspruchs 1.

### Offenbarung der Erfindung

Die Erfindung geht aus von einer Scheibenwischervorrichtung für einen Scheibenwischer, mit zumindest einem Wischarmadapter, mit zumindest einem Wischblattadapter und mit einer Heizeinheit zum Heizen eines Wischblatts und einer Sprüheinheit zu einem Aufsprühen eines Waschfluids auf eine Fahrzeugscheibe, wobei die Sprüheinheit und die Heizeinheit zumindest teilweise in dem Wischblattadapter angeordnet sind.

Nach der Erfindung wird vorgeschlagen, dass der Wischarmadapter und der Wischblattadapter Kopplungselemente aufweisen, welche zu einer seitlichen Kopplung des Wischarmadapters mit dem Wischblattadapter vorgesehen sind. Durch die erfindungsgemäße Ausgestaltung der Scheibenwischervorrichtung kann eine besonders einfache Kopplung des Wischarmadapters mit dem Wischblattadapter erreicht werden. Weiterhin kann vorteilhaft eine einfache Montage der Sprüheinheit und/oder der Heizeinheit erreicht werden. Weiterhin können die Sprüheinheit und die Heizeinheit bauraumsparend angeordnet werden, wodurch zudem vorteilhaft ein Luftwiderstand bei einer Wischbewegung gering gehalten und vorteilhafte Wischeigenschaften erreicht werden können.

Unter einer "Scheibenwischervorrichtung" soll insbesondere zumindest ein Teil, insbesondere eine Unterbaugruppe, eines Scheibenwischers verstanden werden, wobei insbesondere zusätzlich auch Zubehöreinheiten für den Scheibenwischer umfasst sein können. Insbesondere kann die Scheibenwischervorrichtung auch den gesamten Scheibenwischer umfassen. Unter einem "Wischblattadapter" soll insbesondere ein Adapter verstanden werden, der vorzugsweise einen Kontaktbereich zu einem Wischblattbauteil, insbesondere eine Wischleiste und/oder zumindest eine Federschiene, aufweist und bevorzugt mit dem Wischblattbauteil unverlierbar verbunden und insbesondere dazu vorgesehen ist, einen Kopplungsbereich des Wischblattbauteils für eine Kopplung und/oder Kontaktierung mit einem Wischarmadapter bereitzustellen. Unter einem "Wischarmadapter" soll in diesem Zusammenhang insbesondere ein Adapter verstanden werden, der einen Kontaktbereich zu einem Wischarm aufweist und bevorzugt mit dem Wischarm unverlierbar verbunden und insbesondere dazu vorgesehen ist, einen Kopplungsbereich des Wischarms für eine Kopplung und/oder Kontaktierung mit dem Wischblattadapter bereitzustellen. Vorzugsweise ist der Wischarmadapter zumindest teilweise kraft- und/oder formschlüssig mit dem Wischarm verbunden und/oder zumindest teilweise einstückig mit dem Wischarm ausgebildet. Unter "zumindest teilweise einstückig" soll in diesem Zusammenhang insbesondere verstanden werden, dass zumindest ein Bauteil zumindest eines Objekts und/oder zumindest ein erstes Objekt einstückig mit zumindest einem Bauteil zumindest eines weiteren Objekts und/oder einstückig mit zumindest einem weiteren Objekt ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden.

Unter einem "Kopplungselement" soll insbesondere ein Bauteil verstanden werden, welches dazu vorgesehen ist, in einem montierten Zustand insbesondere mit einem zu dem Kopplungselement korrespondierend ausgebildeten weiteren Kopplungselement kraft und/formschlüssig und vorzugsweise lösbar gekoppelt zu sein. Insbesondere ist das Kopplungselement dazu vorgesehen, ein mit dem Kopplungselement kraft- und/oder formschlüssig oder stoffschlüssig verbundenes Objekt, insbesondere den Wischarmadapter, mit einem mit dem weiteren Kopplungselement kraft- und/oder formschlüssig verbundenen oder zumindest teileweise einstückig ausgebildeten Objekt, insbesondere dem Wischblattadapter, kraft- und/oder formschlüssig und vorzugsweise lösbar zu verbinden. Unter einer "seitlichen Kopplung des Wischarmadapters mit dem Wischblattadapter" soll insbesondere verstanden werden, dass der Wischblattadapter und der Wischarmadapter mittels einer Bewegung entlang einer Kopplungsachse koppelbar sind, welche insbesondere zumindest im Wesentlichen senkrecht einer Längserstreckungsrichtung des Wischblattadapters ausgerichtet ist. Insbesondere ist die Kopplungsachse im Wesentlichen parallel zu einer Quererstreckungsrichtung des Wischblattadapters ausgerichtet. Insbesondere ist die Kopplungsachse zumindest teilweise parallel zu der Fahrzeugscheibe, insbesondere in einem Kontaktbereich des Scheibenwischers mit der Fahrzeugscheibe, ausgerichtet. Insbesondere greift zumindest ein Kopplungselement des Wischarmadapters zumindest teilweise in eine Seitenwandung des Wischblattadapters ein. Vorzugsweise greift das Kopplungselement des Wischarmadapters in das Kopplungselement des Wischblattadapters ein. Insbesondere ist in einem montierten Zustand zumindest die Oberfläche einer Seitenwandung des Wischblattadapters mit zumindest der Seitenwandung, des Wischarmadapters vorzugsweise kontaktiert. Insbesondere ist die Kopplungsachse insbesondere im Wesentlichen parallel zu einer Quererstreckungsrichtung des Wischblattadapters ausgerichtet. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Quererstreckungsrichtung" eines Objekts, insbesondere des Wischblattadapters, soll insbesondere eine Richtung verstanden werden, welche senkrecht zu einer Längserstreckungsrichtung des Wischblattadapters und insbesondere parallel zu einer Fahrzeugscheibe, insbesondere im Kontaktbereich des Scheibenwischers mit der Fahrzeugscheibe, ausgerichtet ist. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt.

Unter einer "Sprüheinheit" soll in diesem Zusammenhang insbesondere eine Einheit verstanden werden, die insbesondere zu einem Aufsprühen eines Waschfluids auf die Fahrzeugscheibe vorgesehen ist. Vorzugsweise weist die Sprüheinheit zumindest eine Sprühkanaleinheit auf, welche vorzugsweise im Wischblattadapter, der Wischleiste und/oder der Spoilereinheit angeordnet ist. Insbesondere weist die Sprüheinheit zu einem Aufsprühen zumindest ein Sprühdüsenelement auf, welches vorzugsweise zumindest teilweise einstückig mit der Sprühkanaleinheit ausgebildet ist. Zudem weist die Sprühkanaleinheit bevorzugt ein Sprühkanalverbindungselement auf, welches insbesondere dazu vorgesehen ist, das zumindest eine Sprühdüsenelement mit dem Waschfluid zu versorgen. Zusätzlich weist die Sprüheinheit vorzugsweise ein weiteres Sprühkanalverbindungselement auf, welches in dem Wischarm und/oder dem Wischarmadapter angeordnet ist und in einem montierten Zustand zu einer Versorgung der Sprühkanaleinheit mit dem Waschfluid vorgesehen ist. Unter einer "Heizeinheit" soll insbesondere eine Einheit verstanden werden, die dazu vorgesehen ist, das Waschfluid und/oder das Wischblatt zu heizen. Die Heizeinheit weist zumindest ein Heizelement auf, welches vorzugsweise in dem Wischblattadapter, der Wischleiste und/oder der Spoilereinheit angeordnet ist. Die Heizeinheit ist vorzugweise zumindest teilweise im Wesentlichen parallel zu der Sprühkanaleinheit der Sprüheinheit angeordnet.

Nach der Erfindung wird vorgeschlagen, dass die Sprüheinheit zumindest ein mit zumindest einem Kopplungselement zumindest teilweise verbundenes Sprühkanalverbindungselement aufweist, welches zu einer zumindest teilweise automatischen Kopplung mit einem weiteren Sprühkanalverbindungselement am Wischarm adapter vorgesehen ist. Unter einer "zumindest teilweise automatischen Kopplung" soll insbesondere eine Kopplung zweier Objekte verstanden werden, welche ohne eine äußere Einwirkung, insbesondere Krafteinwirkung eines Bedieners, insbesondere ohne ein Stecken, Schrauben, Pressen, Drücken und/oder eine andere, dem Fachmann als sinnvolle erscheinende Einwirkung, bewirkbar ist. Insbesondere kann mittels der seitlichen Kopplung des Wischarmadapters mit dem Wischblattadapter zusätzlich die Kopplung der Sprüheinheit, insbesondere des Sprühkanalverbindungselements, welches vorzugsweise zumindest teilweise kraft- und/oder formschlüssig oder stoffschlüssig mit dem Kopplungselement des Wischarmadapters verbunden ist, vorzugsweise mittels einer Rastverbindung mit dem weiteren Sprühkanalverbindungselement, welches bevorzugt zumindest teilweise kraft- und/oder formschlüssig oder stoffschlüssig mit dem Kopplungselement des Wischarmadapters verbunden ist, verbunden werden. Insbesondere ist die Rastverbindung des Sprühkanalverbindungselements mit dem weiteren Sprühkanalverbindungselement dazu vorgesehen, bei der Kopplung des Wischarmadapters mit dem Wischblattadapter insbesondere zumindest teilweise automatisch gekoppelt zu werden. Durch die erfindungsgemäße Ausgestaltung kann die Sprüheinheit besonders baumraumsparend angeordnet werden. Zudem kann vorteilhaft eine Montage des Sprühkanalverbindungselements mit dem weiteren Sprühkanalverbindungselement der Sprüheinheit besonders einfach ausgestaltet werden.

Ferner wird vorgeschlagen, dass der Wischarmadapter zumindest teilweise getrennt von der Sprüheinheit und/oder der Heizeinheit angeordnet ist. Insbesondere ist der Wischarmadapter kraft- und/oder formschlüssig und bevorzugt einstückig mit dem Wischarm verbunden und bevorzugt in einem Endbereich des Wischarms angeordnet. Unter "getrennt" angeordnet soll insbesondere verstanden werden, dass ein Objekt beabstandet zu zumindest einem weiteren Objekt angeordnet ist. Durch die erfindungsgemäße Ausgestaltung können/kann vorteilhaft die Sprüheinheit und/oder die Heizeinheit, insbesondere das Sprühkanalverbindungselement der Sprüheinheit, und/oder die Heizeinheit, insbesondere das Heizverbindungselement der Heizeinheit für einen Bediener zu einer Montage besonders leicht erreichbar angeordnet werden, wodurch insbesondere das Sprühkanalverbindungselement der Sprüheinheit, und/oder die Heizeinheit, insbesondere das Heizverbindungselement der Heizeinheit, besonders einfach und manuell mit dem Wischblattadapter verbunden werden können.

Außerdem wird vorgeschlagen, dass die Sprüheinheit zumindest ein Sprühkanalverbindungselement aufweist, welches zu einer zumindest teilweise manuellen Kopplung mit dem Wischblattadapter vorgesehen ist. Unter einer "zumindest teilweise manuellen Kopplung" soll insbesondere eine Kopplung eines Objekts mit einem weiteren Objekt verstanden, wobei eine äußere Einwirkung, insbesondere eine Krafteinwirkung eines Bedieners, auf das Objekt zumindest teilweise eine Kopplung des Objekts mit dem weiteren Objekt bewirkt. Insbesondere ist das Sprühkanalverbindungselement zumindest teilweise als ein Schlauchelement ausgebildet, welches zur Führung des Waschfluids vorgesehen ist. Vorzugsweise weist zusätzlich die Heizeinheit ein Heizverbindungselement auf, welches zu einer zumindest teilweise manuellen Kopplung mit dem Wischblattadapter vorgesehen ist. Durch die erfindungsgemäße Ausgestaltung können/kann vorteilhaft die Sprüheinheit und/oder die Heizeinheit besonders einfach mit dem Wischblattadapter verbunden werden. Zudem können/kann ein Reparatur- und/oder Wartungsaufwand der Sprüheinheit, der Heizeinheit und der Scheibenwischervorrichtung gering gehalten werden.

Weiterhin wird vorgeschlagen, dass die Sprüheinheit zumindest eine Rasteinheit aufweist, welche zu einer kraft- und/oder formschlüssigen Verbindung des Sprühkanalverbindungselements mit einer Sprühkanaleinheit der Sprüheinheit im Wischblattadapter vorgesehen ist. Insbesondere weist die Rasteinheit zumindest ein Rastelement auf, welches kraft- und/oder formschlüssig oder stoffschlüssig, insbesondere einstückig, mit dem Sprühkanalverbindungselement ausgebildet ist. Vorzugsweise weist die Rasteinheit zumindest ein weiteres Rastelement auf, welches kraft- und/oder formschlüssig oder stoffschlüssig mit einem weiteren Sprühkanalverbindungselement des Wischblattadapters ausgebildet, und zu einer Rastverbindung mit dem Rastelement des Sprühkanalverbindungselements vorgesehen ist. Vorzugsweise ist das weitere Rastelement kraft-, stoff- und/oder formschlüssig mit dem Wischblattadapter, insbesondere einem Grundkörper des Wischblattadapters, verbunden. Durch die erfindungsgemäße Ausgestaltung kann vorteilhaft eine besonderes einfache Montage des Wischarmadapters, der Sprüheinheit erreicht werden. Zudem können/kann ein Reparatur- und/oder Wartungsaufwand der Sprüheinheit gering gehalten werden.

Zudem wird vorgeschlagen, dass der Wischblattadapter eine an zumindest einer zu einer Längserstreckungsrichtung des Wischblattadapters quer verlaufenden Seitenwand angeordnete Verbindungseinheit aufweist, die zu einer Verbindung mit dem Sprühkanalverbindungselement vorgesehen ist. Insbesondere ist die Längserstreckungsrichtung des Wischblattadapters im Wesentlichen parallel zu einer Längserstreckungsrichtung des Wischblatts ausgerichtet. Insbesondere ist eine Oberfläche der Seitenwandung des Wischblattadapters quer zur Längserstreckungsrichtung ausgerichtet. Unter "quer" soll hier insbesondere "zumindest im Wesentlichen senkrecht" verstanden werden. Unter "zumindest im Wesentlichen senkrecht" soll insbesondere eine Ausrichtung einer Richtung relativ zu einer Bezugsrichtung, insbesondere in einer Ebene, verstanden werden, wobei die Richtung und die Bezugsrichtung einen Winkel einschließen, welcher um weniger als 8°, vorteilhaft weniger als 5° und besonders vorteilhaft weniger als 2° von einem rechten Winkel abweicht. Insbesondere ist die Verbindungseinheit dazu vorgesehen, das Sprühkanalverbindungselement und/oder das Heizverbindungselement mit dem Wischblattadapter insbesondere mit einem weiteren Sprühkanalverbindungselement und/oder dem Heizelement der Heizeinheit zu verbinden. Insbesondere ist die Verbindungseinheit mit einer Rasteinheit, insbesondere der bereits erwähnten Rasteinheit, kraft- und/oder formschlüssig, stoffschlüssig verbunden und bildet eine kraft-und/oder formschlüssige Verbindung des Sprühkanalelements und/oder des Heizverbindungselements mit dem Wischblattadapter aus. Durch die erfindungsgemäße Ausgestaltung kann insbesondere eine besonders einfache Kopplung des Sprühkanalverbindungselements und/oder des Heizverbindungselements bereitgestellt werden.

Außerdem wird vorgeschlagen, dass die Heizeinheit zumindest ein Heizverbindungselement aufweist, welches zu einer zumindest teilweise manuellen Montage mit einem Heizelement der Heizeinheit in dem Wischblattadapter vorgesehen ist. Insbesondere ist das Heizverbindungselement zumindest teilweise als ein Verbindungskabel ausgebildet, welches zur Versorgung des Heizelements der Heizeinheit mit einer elektrischen Energie vorgesehen ist. Insbesondere ist das Heizverbindungselement vorzugsweise zumindest teilweise getrennt von dem Sprühkanalverbindungselement angeordnet. Durch die erfindungsgemäße Ausgestaltung können/kann vorteilhaft die Sprüheinheit und/oder die Heizeinheit besonders einfach mit dem Wischblattadapter verbunden werden. Zudem können/kann ein Reparatur- und/oder Wartungsaufwand der Heizeinheit und/oder der Scheibenwischervorrichtung gering gehalten werden.

Ferner wird vorgeschlagen, dass die Heizeinheit zumindest eine Rasteinheit aufweist, welche zu einer kraft- und/oder formschlüssigen Verbindung des Heizverbindungselements mit einem Heizelement der Heizeinheit im Wischblattadapter vorgesehen ist. Insbesondere weist die Rasteinheit zumindest ein Rastelement auf, welches kraft- und/oder formschlüssig mit dem Heizverbindungselement verbunden oder zumindest teilweise einstückig mit dem Heizverbindungselement ausgebildet ist. Vorzugsweise weist die Rasteinheit zumindest ein weiteres Rastelement auf, welches kraft- und/oder formschlüssig oder stoffschlüssig mit dem Heizelement im Wischblattadapter verbunden und zu einer Rastverbindung mit dem Rastelement des Heizverbindungselements vorgesehen ist. Vorzugsweise ist das weitere Rastelement kraft-, stoff, und/oder form-schlüssig mit dem Wischblattadapter verbunden. Es ist denkbar, dass die Rasteinheit der Heizeinheit zumindest teilweise einstückig mit der Rasteinheit der Sprüheinheit verbunden ist. Es ist denkbar, dass insbesondere das Rastelement an dem Sprühkanalverbindungselement mit dem Rastelement am Heizverbindungselement einstückig verbunden ist. Durch die erfindungsgemäße Ausgestaltung kann vorteilhaft eine besonderes einfache Montage des Wischarmadapters der Heizeinheit erreicht werden. Zudem können/kann ein Reparatur- und/oder Wartungsaufwand der Heizeinheit gering gehalten werden.

Zudem wird ein Scheibenwischer mit einer Scheibenwischervorrichtung vorgeschlagen. Durch die erfindungsgemäße Ausgestaltung des Scheibenwischers kann eine besonders einfache Kopplung des Wischarmadapters mit dem Wischblattadapter erreicht werden. Zudem kann eine besonders einfache Montage des Wischarmadapters mit dem Wischblattadapter erreicht werden. Weiterhin kann vorteilhaft eine einfache Montage der Sprüheinheit und der Heizeinheit erreicht werden. Weiterhin können die Sprüheinheit und die Heizeinheit bauraumsparend angeordnet werden, wodurch zudem vorteilhaft ein Luftwiderstand bei einer Wischbewegung gering gehalten und vorteilhafte Wischeigenschaften erreicht werden können.

Zudem wird ein Verfahren vorgeschlagen, wobei in zumindest einem Verfahrensschritt die Sprüheinheit und die Heizeinheit nach einer seitlichen Kopplung des Wischarmadapters mit dem Wischblattadapter, Spühkanalverbindungselemente der Sprüheinheit und Heizverbindungselemente der Heizeinheit verbunden werden. Durch die erfindungsgemäße Ausgestaltung der Scheibenwischervorrichtung kann eine besonders einfache Kopplung des Wischarmadapters mit dem Wischblattadapter erreicht werden. Zudem kann eine besonders einfache Montage des Wischarmadapters mit dem Wischblattadapters erreicht werden. Weiterhin kann vorteilhaft eine einfache Montage der Sprüheinheit und der Heizeinheit erreicht werden. Weiterhin können die Sprüheinheit und die Heizeinheit bauraumsparend angeordnet werden, wodurch zudem vorteilhaft ein Luftwiderstand bei einer Wischbewegung gering gehalten und vorteilhafte Wischeigenschaften erreicht werden können.

Zeichnungen Weitere Vorteile ergeben sich aus der folgenden Zeichnungsbeschreibung. In den Zeichnungen sind zwei Ausführungsbeispiele dargestellt.

Es zeigen:
- Fig. 1: einen Scheibenwischer mit einer Scheibenwischervorrichtung in einer vereinfachten Darstellung von oben,
- Fig. 2: die Scheibenwischervorrichtung in einer vereinfachten Darstellung von oben,
- Fig. 3: eine nicht zur Erfindung gehörende Scheibenwischervorrichtung in einer vereinfachten Darstellung in einer seitlichen Schnittansicht, wobei die Schnittebene senkrecht zu einer Längserstreckungsrichtung des Wischblattadapters angeordnet ist,
- Fig. 4: ein Verfahren zur Montage der Scheibenwischervorrichtung in einer stark vereinfachten Verlaufsdarstellung und
- Fig. 5: ein erfindungsgemäße weiteres Ausführungsbeispiel der Scheibenwischervorrichtung in einer vereinfachten Darstellung von oben.

### Beschreibung der Ausführungsbeispiele

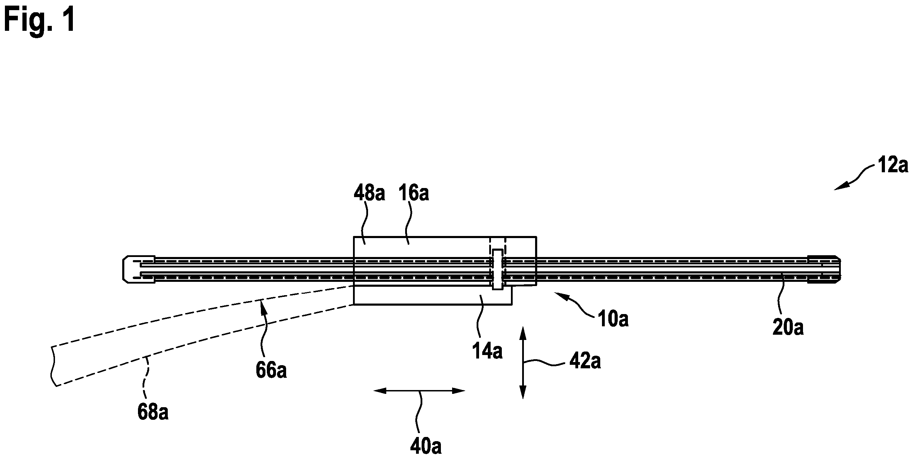

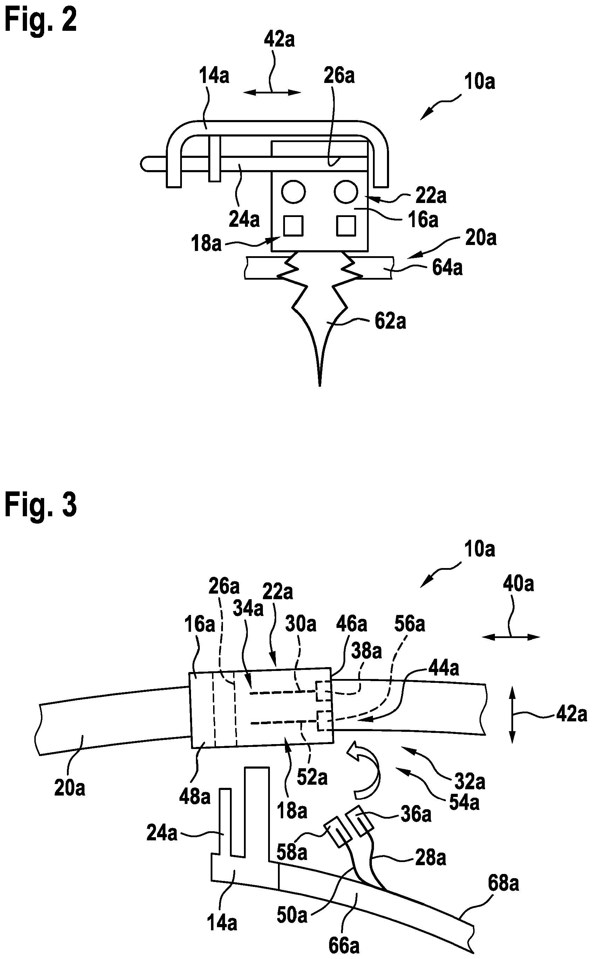

Figur 1 zeigt einen Scheibenwischer 12a. Der Scheibenwischer 12a ist dazu vorgesehen, eine Fahrzeugscheibe eines Fahrzeugs zu wischen. Der Scheibenwischer 12a ist als ein Windabweiserscheibenwischer ausgebildet. Wie zusätzlich Figur 2 in einer seitlichen Darstellung des Scheibenwischers 12a zeigt, weist der Scheibenwischer 12a zumindest ein Wischblatt 20a auf. Das Wischblatt 20a weist zumindest eine Wischleiste 62a auf. Die Wischleiste 62a, insbesondere eine Wischlippe der Wischleiste 62a, ist dazu vorgesehen, zu einem Wischen der Fahrzeugscheibe mit der Fahrzeugscheibe kontaktiert zu sein. Zudem weist der Scheibenwischer 12a zumindest eine Federschiene 64a auf, welche dazu vorgesehen ist, das Wischblatt 20a, insbesondere die Wischleiste 62a, mit einer Spannkraft zu beaufschlagen. Zudem weist die Wischleiste 62a zumindest eine Spoilereinheit (hier nicht gezeigt) auf. Die Spoilereinheit ist auf einer von der Fahrzeugscheibe abgewandten Seite des Wischblatts 20a angeordnet. Alternativ kann der Scheibenwischer 12a auch in Flachbauweise als Flachbalkenscheibenwischer ausgebildet sein, wobei auf eine Spoilereinheit verzichtet werden könnte.

Der Scheibenwischer 12a weist einen Wischarm 66a auf (vgl. Figur 1). Der Wischarm 66a ist drehbar an einem Fahrzeugbauteil gelagert. Der Wischarm 66a ist dazu vorgesehen, den Scheibenwischer 12a, insbesondere das Wischblatt 20a, mit einer Wischbewegung zu beaufschlagen. Der Wischarm 66a kann einen Wischarmkörper (hier nicht gezeigt) und ein Wischarmgehäuse 68a aufweisen. Das Wischarmgehäuse 68a begrenzt einen Innenraum des Wischarms 66a.

Der Scheibenwischer 12a weist eine Scheibenwischervorrichtung 10a auf. Die Scheibenwischervorrichtung 10a ist dazu vorgesehen, den Wischarm 66a mit dem Wischblatt 20a und/oder der Wischleiste 62a zu verbinden. Die Scheibenwischervorrichtung 10a ist zu einer lösbaren Verbindung des Wischarms 66a mit dem Wischblatt 20a und/oder der Wischleiste 62a vorgesehen. Die Scheibenwischervorrichtung 10a ist auf einer der Fahrzeugscheibe abgewandten Seite der Wischleiste 62a angeordnet. Die Scheibenwischervorrichtung 10a ist zumindest teilweise unlösbar mit der Wischleiste 62a verbunden. Die Scheibenwischervorrichtung 10a ist zumindest teilwiese kraft- und/oder formschlüssig mit dem Wischarm 66a verbunden. Vorzugsweise ist die Scheibenwischervorrichtung 10a zumindest teilweise stoffschlüssig mit dem Wischarm 66a verbunden. Es ist alternativ denkbar, dass die Scheibenwischervorrichtung 10a teilweise einstückig mit dem Wischarm 66a verbunden ist. Zudem ist alternativ denkbar, dass die Scheibenwischervorrichtung 10a lösbar mit der Wischleist 62a verbunden ist.

Figur 3 zeigt die Scheibenwischervorrichtung 10a in einem nicht montierten Zustand in einer Ansicht von oben, die nicht Teil der Erfindung ist. Die Scheibenwischervorrichtung 10a weist einen Wischarmadapter 14a auf. Der Wischarmadapter 14a ist dazu vorgesehen, einen Kopplungsbereich des Wischarms 66a mit der Wischleiste 62a und/oder dem Wischblatt 20a teilweise bereitzustellen und/oder auszubilden. Der Wischarmadapter 14a ist stoffschlüssig mit dem Wischarm 66a verbunden. Alternativ kann der Wischarmadapter 14a einstückig mit dem Wischarm 66a ausgebildet oder kraft- und/oder formschlüssig mit dem Wischarm 66a verbunden sein.

Der Wischarmadapter 14a ist zu einer kraft- und/oder formschlüssigen Verbindung mit einem Wischblattadapter 16a der Scheibenwischervorrichtung 10a vorgesehen. Der Wischarmadapter 14a ist zu einer seitlichen Kopplung mit dem Wischblattadapter 16a vorgesehen. Der Wischarmadapter 14a ist als ein Side-Lock Wischarmadapter 14a ausgebildet. Der Wischarmadapter 14a weist zumindest ein Kopplungselement 24a auf, welches dazu vorgesehen ist, in einem montierten Zustand der Scheibenwischervorrichtung 10a mit einem weiteren Kopplungselement 26a des Wischblattadapters 16a verbunden zu werden. Das Kopplungselement 24a ist als ein Bolzen ausgebildet. Das Kopplungselement 24a weist eine Längserstreckung auf, welche senkrecht zu einer Längserstreckungsrichtung des Wischarms 66a und/oder in einem montierten Zustand der Scheibenwischervorrichtung 10a senkrecht zu einer Längserstreckung des Wischblatts 20a ausgerichtet ist. Das Kopplungselement 24a weist einen runden Querschnitt auf. Der Querschnitt des Kopplungselement 24a ist senkrecht zu der Längserstreckung des Kopplungselements 24 ausgerichtet. Alternativ kann der Querschnitt elliptisch, oval, polygonförmig oder dergleichen geformt sein. Das Kopplungselement 24a greift in dem montierten Zustand zumindest teilweise in den Wischblattadapter 16a ein.

Die Scheibenwischervorrichtung 10a weist den Wischblattadapter 16a auf. Der Wischblattadapter 16a weist eine Längserstreckungsrichtung 40a auf. Die Längserstreckungsrichtung 40a ist, insbesondere in einem Wischbetriebszustand, senkrecht zu einer Wischrichtung des Scheibenwischers 12a in einem Kontaktbereich des Scheibenwischers 12a mit der Fahrzeugscheibe ausgerichtet. Die Längserstreckungsrichtung 40a des Wischblattadapters 16a ist parallel zu der Längserstreckungsrichtung, insbesondere einer Haupterstreckungsrichtung, des Wischblatts 20a in einem Kontaktbereich des Wischblattadapters 16a mit der Wischleiste 62a ausgerichtet. Die Längserstreckungsrichtung 40a des Wischblattadapters 16a bildet die Haupterstreckungsrichtung der Wischblattadapters 16a aus. Alternativ kann die Haupterstreckungsrichtung senkrecht zu der Längserstreckungsrichtung ausgebildet sein. Der Wischblattadapter 16a weist eine Quererstreckungsrichtung 42a auf. Die Quererstreckungsrichtung 42a des Wischblattadapters 16a ist senkrecht zu der Längserstreckungsrichtung 40a des Wischblattadapters 16a ausgerichtet. Die Quererstreckungsrichtung 42a des Wischblattadapters 16a ist parallel zu der Wischrichtung des Scheibenwischers 12a in einem Kontaktbereich des Scheibenwischers 12a auf der Fahrzeugscheibe ausgerichtet.

Der Wischblattadapter 16a ist dazu vorgesehen, einen Kopplungsbereich des Wischblatts 20 mit dem Wischarm 66 teilweise bereitzustellen und/oder auszubilden. Der Wischblattadapter 16a ist unverlierbar mit der Wischleiste 62a verbunden. Der Wischblattadapter 16a ist kraft- und/oder formschlüssig mit der Wischleiste 62a verbunden. Der Wischblattadapter 16a umgreift die Wischleiste 62a und/oder zumindest eine Federschiene 64a zumindest teilweise. Alternativ kann der Wischblattadapter 16a mittels einer Klemmverbindung, einer Rastverbindung, einer, insbesondere lösbaren Nietverbindung und/oder mittels einer anderen, dem Fachmann als sinnvoll erscheinenden Verbindung mit der Wischleiste 62a verbunden sein.

Der Wischblattadapter 16a weist zumindest einen Grundkörper 48a. Der Grundkörper 48a bildet zumindest eine Seitenwandung 46a des Wischblattadapters 16a aus, welche senkrecht zu der Längserstreckungsrichtung 40a des Wischblattadapters 16a ausgerichtet ist. Die Seitenwandung 46a verläuft quer zur Längserstreckungsrichtung 40a des Wischblattadapters 16a.

Der Wischblattadapter 16a ist zu einer kraft- und/oder formschlüssigen Verbindung mit dem Wischarmadapter 14a vorgesehen. Der Wischblattadapter 16a ist zu einer seitlichen Kopplung mit dem Wischarmadapter 14a vorgesehen. Der Wischblattadapter 16a ist als ein Side-Lock Wischblattadapter 16a ausgebildet Der Wischblattadapter 16a weist ein weiteres Kopplungselement 26a auf, welches dazu vorgesehen ist, in einem montierten Zustand der Scheibenwischervorrichtung 10a mit dem Kopplungselement 24a des Wischarmadapters 14a gekoppelt zu sein. Das weitere Kopplungselement 26a ist als eine Ausnehmung ausgebildet. Das weitere Kopplungselement 26a weist eine Längserstreckung auf, welche senkrecht zu der Längserstreckungsrichtung 40a des Wischblattadapters 16a ausgerichtet ist. Die Längserstreckung des weiteren Kopplungselements 26a ist parallel zur Längserstreckung des Kopplungselements 24a des Wischarmadapters 14a ausgerichtet. Das weitere Kopplungselement 26a ist korrespondierend zu dem Kopplungselement 24a ausgebildet. Das weitere Kopplungselement 26a weist einen runden Querschnitt auf. Der Querschnitt des weiteren Kopplungselement 26a ist senkrecht zu der Längserstreckung des weiteren Kopplungselements 24 ausgerichtet. Alternativ kann der Querschnitt des weiteren Kopplungselements 26a elliptisch, oval, polygonförmig oder dergleichen geformt sein. Das weitere Kopplungselement 26a ist dazu vorgesehen, in dem montierten Zustand das Kopplungselement 24a des Wischarmadapters 14a teilweise aufzunehmen. Das weitere Kopplungselement 26a ist zu einer formschlüssigen Lagerung des Kopplungselements 24a vorgesehen. Das weitere Kopplungselement 26a ist zu einer drehbaren Lagerung des Kopplungselements 24a vorgesehen. Die Kopplungselemente 24a, 26a bilden eine Drehachse aus, um welche der Wischblattadapter 16a relativ zu dem Wischarmadapter 14a drehbar gelagert ist. Die Drehachse ist parallel zur Längserstreckung des Kopplungselements 24a und/oder zur Längserstreckung des weiteren Kopplungselements 26a ausgerichtet.

In einem montierten Zustand ist der Wischarmadapter 14a in Quererstreckungsrichtung 42a des Wischblattadapters 16a teilweise versetzt zu dem Wischblattadapter 16a angeordnet. In dem montierten Zustand sind das Kopplungselement 24a und das weitere Kopplungselement 26a in Quererstreckungsrichtung 42a des Wischblattadapters 16a versatzlos zueinander angeordnet. Der Wischblattadapter 16a weist zumindest eine Verbindungseinheit 44a auf. Die Verbindungseinheit 44a ist zu einer Verbindung des Wischblattadapters 16a mit einer Sprüheinheit 22a, insbesondere einem weiteren Sprühkanalverbindungselement 28a der Sprüheinheit 22a, vorgesehen.

Die Scheibenwischervorrichtung 10a weist die Sprüheinheit 22a auf. Die Sprüheinheit 22a ist dazu vorgesehen, in einem Wischbetriebszustand ein Waschfluid auf die zu wischende Fahrzeugscheibe zu sprühen. Die Sprüheinheit 22a weist dazu zumindest eine Sprühkanaleinheit 34a auf. Die Sprühkanaleinheit 34a ist teilweise innerhalb des Wischblattadapters 16a angeordnet. Die Sprühkanaleinheit 34a ist teilweise von dem Grundkörper 48a des Wischblattadapters 16a umschlossen.

Die Sprühkanaleinheit 34a weist zumindest ein Sprühkanalverbindungselement 30a auf, welches zu einem Führen des Waschfluids innerhalb des Wischblattadapters 16a angeordnet ist. Das Sprühkanalverbindungselement 30a ist dazu vorgesehen, dem zumindest einen Sprühdüsenelement das Waschfluid zuzuführen.

Die Sprüheinheit 22a weist zumindest das Sprühdüsenelement zu einem Sprühen des Waschfluids auf die Fahrzeugscheibe auf. Das Sprühdüsenelement ist zumindest teilweise einstückig mit dem Sprühkanalverbindungselement 30a verbunden. Die Sprüheinheit 22a weist das weitere Sprühkanalverbindungselement 28a auf. Das Sprühkanalverbindungselement 28a ist als ein Schlauchelement ausgebildet. Das Sprühkanalverbindungselement 28a ist dazu vorgesehen, der Sprühkanaleinheit 34a das Waschfluid zuzuführen. Das Sprühkanalverbindungselement 28a ist zumindest kraft- und/oder formschlüssig mit dem Wischarm 66a verbunden. Es ist auch denkbar, dass das Sprühkanalverbindungselement 28a stoffschlüssig mit dem Wischarm 66a verbunden ist. Das Sprühkanalverbindungselement 28a ist teilweise innerhalb des Wischarmgehäuses 68a angeordnet. Das Sprühkanalverbindungselement 28a ist teilweise in einem Außenbereich des Wischarmgehäuses 68a angeordnet. Die Sprüheinheit 22a ist getrennt von dem Wischarmadapter 14a angeordnet. Das weitere Sprühkanalverbindungselement 28a ist dazu vorgesehen, in dem montierten Zustand mit dem Wischblattadapter 16a verbunden zu sein. Das weitere Sprühkanalverbindungselement 28a ist dazu vorgesehen, in dem montierten Zustand mit der Sprühkanaleinheit 34a, insbesondere mit dem Sprühkanalverbindungselement 30a, verbunden zu sein. Das weitere Sprühkanalverbindungselement 28a ist zu einer manuellen Kopplung mit dem Wischblattadapter 16a vorgesehen. Das weitere Sprühkanalverbindungselement 28a ist zu einer manuellen Kopplung mit der Sprühkanaleinheit 34a, insbesondere mit dem Sprühkanalverbindungselement 30a des Wischblattadapters 16a, vorgesehen.

Die Sprüheinheit 22a weist eine Rasteinheit 32a auf. Die Rasteinheit 32a ist einstückig mit der Verbindungseinheit 44a ausgebildet. Alternativ kann die Rasteinheit 32a getrennt von der Verbindungseinheit 44a ausgebildet und/oder angeordnet sein. Die Rasteinheit 32a weist ein Rastelement 38a auf. Das Rastelement 38a ist kraft- und/oder formschlüssig mit dem Sprühkanalverbindungselement 30a ausgebildet. Die Rasteinheit 32a weist ein weiteres Rastelement 36a auf. Das weitere Rastelement 36a ist kraft- und/oder formschlüssig mit dem weiteren Sprühkanalverbindungselement 28a verbunden. Das Rastelement 38a und das weitere Rastelement 36a sind zu einer Rastverbindung miteinander vorgesehen. Das Rastelement 38a und das weitere Rastelement 36a sind zu einer Verbindung des Sprühkanalverbindungselements 30a, insbesondere der Sprühkanaleinheit 34a, mit dem weiteren Sprühkanalverbindungselement 28a vorgesehen.

Die Scheibenwischervorrichtung 10a weist eine Heizeinheit 18a auf. Die Heizeinheit 18a ist dazu vorgesehen, in einem Wischbetriebszustand das Waschfluid zu heizen. Die Heizeinheit 18a ist dazu vorgesehen, in einem Wischbetriebszustand das Wischblatt 20a zu heizen. Die Heizeinheit 18a weist zumindest ein Heizelement 52a auf. Das Heizelement 52a ist als elektrisches Heizelement 52a ausgebildet. Das Heizelement 52a ist teilwiese in dem Wischblattadapter 16a, insbesondere dem Grundkörper 48a des Wischblattadapters 16a, angeordnet. Das Heizelement 52a ist teilweise von einem Grundkörper 48a des Wischblattadapters 16a umschlossen.

Die Heizeinheit 18a weist ein Heizverbindungselement 50a auf. Das Heizverbindungselement 50a ist zu einer Versorgung des Heizelements 52a mit einer elektrischen Energie vorgesehen. Das Heizverbindungselement 50a ist als ein Verbindungkabel oder als Verbindungsdraht ausgebildet. Das Heizverbindungselement 50a ist an dem Wischarm 66a angeordnet. Das Heizverbindungselement 50a ist getrennt von dem Wischarmadapter 14a angeordnet. Das Heizverbindungselement 50a ist teilweise innerhalb des Wischarmgehäuses 68a angeordnet. Das Heizverbindungselement 50a ist teilweise in einem Außenbereich des Wischarmgehäuses 68a angeordnet. Das Heizverbindungselement 50a weist vorzugsweise ein Schutzelement, beispielsweise einen Schutzmantel und/oder eine Schutzschicht, auf, welche dazu vorgesehen ist, das Heizverbindungselement 50a der Heizeinheit 18a vor einem Kontakt mit einem Fluid zu schützen. Insbesondere ist das Heizverbindungselement 50a getrennt von dem Sprühkanalverbindungselement 28a angeordnet. Das Heizverbindungselement 50a ist zu einer manuellen Montage mit einem Heizelement 52a der Heizeinheit 18a in dem Wischblattadapter 16a vorgesehen ist.

Die Heizeinheit 18a weist eine weitere Rasteinheit 54a auf. Die weitere Rasteinheit 54a ist teilweise einstückig mit der Verbindungseinheit 44a ausgebildet. Alternativ kann die weitere Rasteinheit 54a stoffschlüssig mit der Verbindungseinheit 44a verbunden oder getrennt von der Verbindungseinheit 44a ausgebildet sein. Die weitere Rasteinheit 54a weist ein zusätzliches Rastelement 56a auf. Das zusätzliche Rastelement 56a ist kraft- und/oder formschlüssig mit dem Heizelement 52a ausgebildet. Die Rasteinheit 54a weist ein weiteres zusätzliches Rastelement 58a auf. Das weitere zusätzliche Rastelement 58a ist kraft- und/oder formschlüssig mit dem Heizverbindungselement 50a verbunden. Das zusätzliche Rastelement 56a und das weitere zusätzliche Rastelement 58a sind zu einer Rastverbindung miteinander vorgesehen. Das zusätzliche Rastelement 56a und das weitere zusätzliche Rastelement 58a sind zu einer Verbindung des Heizverbindungselements 50a mit dem Heizelement 52a vorgesehen.

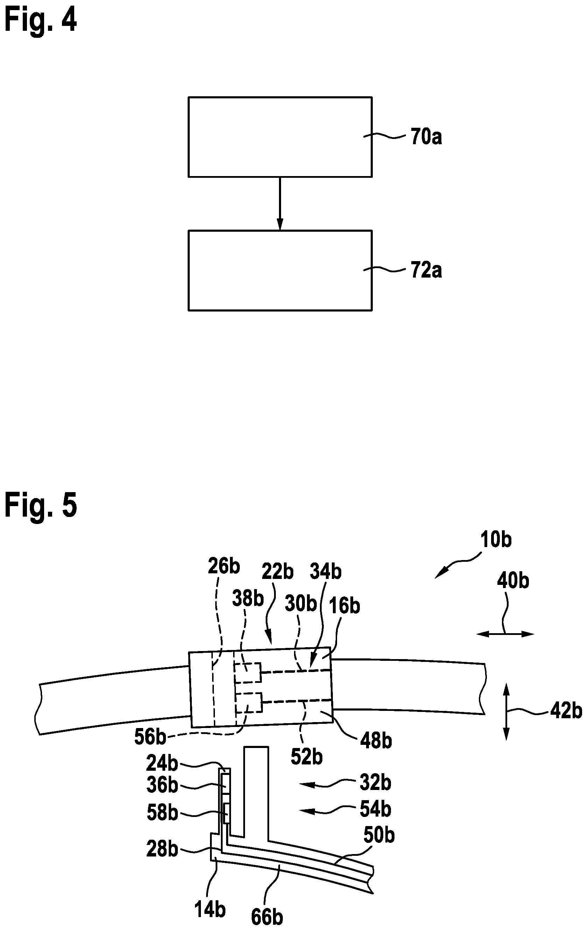

Figur 4 zeigt ein Verfahren zur Montage der Scheibenwischervorrichtung 10a.

Das Verfahren zur Montage der Scheibenwischervorrichtung 10a weist zumindest einen Verfahrensschritt 70a auf. In dem Verfahrensschritt 70a wird der Wischarmadapter 14b seitlich mit dem Wischarmadapter 14a gekoppelt. Das weitere Kopplungselement 24b des Wischarmadapters 14b wird seitlich mit dem Kopplungselement 26b des Wischblattadapters 16b gekoppelt.

Das Verfahren zur Montage der Scheibenwischervorrichtung 10a weist zumindest einen weiteren Verfahrensschritt 72a auf. In dem weiteren Verfahrensschritt 72a wird das weitere Sprühkanalverbindungselement 28a mit dem Sprühkanalverbindungselement 30a verbunden. Zusätzlich kann in dem weiteren Verfahrensschritt 72a das Heizverbindungselement 50a mit dem Heizelement 52a verbunden werden.

Das Verfahren zur Montage der Scheibenwischervorrichtung 10a ist nicht auf die genannten Verfahrensschritte und/oder eine Reihenfolge der Verfahrensschritte beschränkt. Insbesondere kann das Verfahren eine von der genannten Zahl an Verfahrensschritten abweichende Zahl an Verfahrensschritten aufweisen.

In der Figur 5 ist ein Ausführungsbeispiel der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figur 5 ist der Buchstabe a durch den Buchstaben b ersetzt.

Figur 5 zeigt ein erfindungsgemäßes Ausführungsbeispiel einer Scheibenwischervorrichtung 10b. Die Scheibenwischervorrichtung 10b ist Teil eines Scheibenwischers 12b. Die Scheibenwischervorrichtung 10b weist einen Wischarmadapter 14b auf. Der Wischarmadapter 14b weist ein Kopplungselement 24b auf. Die Scheibenwischervorrichtung 10b weist einen Wischblattadapter 16b auf. Der Wischblattadapter 16b weist einen Grundkörper 48b auf. Der Wischblattadapter 16b weist ein weiteres Kopplungselement 26b auf. Das weitere Kopplungselement 26b des Wischblattadapters 16b und das Kopplungselement 24b des Wischarmadapters 14b sind zu einer seitlichen Kopplung, insbesondere Side-Lock Kopplung, des Wischarmadapters 14b mit dem Wischblattadapter 16b vorgesehen.

Die Scheibenwischervorrichtung 10b weist eine Sprüheinheit 22b auf. Die Sprüheinheit 22b weist eine Sprühkanaleinheit 34b auf. Die Sprühkanaleinheit 34b ist teilweise in dem Wischblattadapter 16b angeordnet. Die Sprühkanaleinheit 34b weist ein Sprühkanalverbindungselement 30b auf. Das Sprühkanalverbindungselement 30b ist in dem Wischblattadapter 16b angeordnet. Das Sprühkanalverbindungselement 30b ist mit dem weiteren Kopplungselement 26b verbunden. Die Sprüheinheit 22b weist ein weiteres Sprühkanalverbindungselement 28b auf. Das weitere Sprühkanalverbindungselement 28b ist teilweise innerhalb eines Wischarms 66b des Scheibenwischers 12b angeordnet. Das weitere Sprühkanalverbindungselement 28b ist teilweise in dem Wischarmadapter 14b angeordnet. Das weitere Sprühkanalverbindungselement 28b ist mit dem Kopplungselement 24b verbunden. Das weitere Sprühkanalverbindungselement 28b ist, insbesondere im Unterschied zum ersten Ausführungsbeispiel, zumindest teilweise in dem Kopplungselement 24b angeordnet.

Das Sprühkanalverbindungselement 30b des Wischblattadapters 16b und das weitere Sprühkanalverbindungselement 28b des Wischarmadapters 14b sind bei einer Kopplung des Wischarmadapters 14b mit dem Wischblattadapter 16b zu einer automatischen Kopplung vorgesehen. Das Sprühkanalverbindungselement 30b des Wischblattadapters 16b und das weitere Sprühkanalverbindungselement 28b des Wischarmadapters 14b sind bei einer Kopplung des weiteren Kopplungselements 26b mit dem Kopplungselement 24b zu einer automatischen Kopplung vorgesehen.

Es ist denkbar, dass die Sprüheinheit 22b eine Rasteinheit 32b aufweist, welche ein mit dem Sprühkanalverbindungselement 30b kraft- und/oder formschlüssig oder stoffschlüssig verbundenes Rastelement 36b und/oder ein mit dem weiteren Sprühkanalverbindungselement 28b kraft- und/oder formschlüssig oder stoffschlüssig verbundenes weiteres Rastelement 38b aufweist, wobei das Rastelement 36b und das weitere Rastelement 38b insbesondere dazu vorgesehen sind, in einem montierten Zustand kraft- und/oder formschlüssig miteinander verbunden zu werden. Nach der Erfindung weist die Scheibenwischervorrichtung 10b eine Heizeinheit 18b auf, wobei die Heizeinheit 18b ein in dem Wischblattadapter 16b angeordnetes Heizelement 52b und ein in dem Kopplungselement 24b des Wischarmadapters 14b teilweise angeordnetes Heizverbindungselement 50b aufweist. Die Heizeinheit 18b weist eine weitere Rasteinheit 54b auf, welche ein mit dem Heizelement 52b kraft- und/oder formschlüssig oder stoffschlüssig verbundenes zusätzliches Rastelement 56b und/oder ein mit dem Heizverbindungselement 50b kraft- und/oder formschlüssig oder stoffschlüssig verbundenes weiteres zusätzliches Rastelement 58b aufweist, wobei das zusätzliche Rastelement 36b und das weitere zusätzliche Rastelement 38b insbesondere dazu vorgesehen sind, zu einer Montage kraft- und/oder formschlüssig miteinander verbunden zu werden.

## Patentansprüche

1. Scheibenwischervorrichtung (10b) für einen Scheibenwischer (12b), mit zumindest einem Wischarmadapter (14b), mit zumindest einem Wischblattadapter (16b) und mit einer Heizeinheit (18b) zum Heizen eines Wischblatts (20b) und einer Sprüheinheit (22b) zu einem Aufsprühen eines Waschfluids auf eine Fahrzeugscheibe, wobei die Sprüheinheit (22b) und die Heizeinheit (18b) zumindest teilweise in dem Wischblattadapter (16b) angeordnet sind, wobei der Wischarmadapter (14a; 14b) und der Wischblattadapter (16a; 16b) Kopplungselemente (24b, 26b) aufweisen, welche zu einer seitlichen Kopplung des Wischarmadapters (14b) mit dem Wischblattadapter (16b) vorgesehen sind, **dadurch gekennzeichnet, dass** die Sprüheinheit (22b) zumindest ein mit zumindest dem Kopplungselement (26b) am Wischblattadapter (16b) zumindest teilweise verbundenes Sprühkanalverbindungselement (30b) aufweist, welches zu einer zumindest teilweisen automatischen Kopplung mit einem weiteren Sprühkanalverbindungselement (28b) am Wischarmadapter (14b) vorgesehen ist, und wobei die Heizeinheit (18b) ein in dem Wischblattadapter (16b) angeordnetes Heizelement (52b) und ein in dem Kopplungselement (24b) des Wischarmadapters (14b) teilweise angeordnetes Heizverbindungselement (50b) aufweist.

2. Scheibenwischer (12b) mit einer Scheibenwischervorrichtung (10b) nach einem der vorhergehenden Ansprüche.

3. Verfahren zu einer Montage einer Scheibenwischervorrichtung (10b) nach einem der Ansprüche 1 bis 2.

## Claims

1. Windscreen wiper device (10b) for a windscreen wiper (12b), having at least one wiper arm adapter (14b), having at least one wiper blade adapter (16b), and having a heating unit (18b) for heating a wiper blade (20b) and having a spray unit (22b), for spraying a washing fluid onto a vehicle windscreen, wherein the spray unit (22b) and the heating unit (18b) are arranged at least partially in the wiper blade adapter (16b), wherein the wiper arm adapter (14a; 14b) and the wiper blade adapter (16a; 16b) have coupling elements (24b, 26b) which are provided for lateral coupling of the wiper arm adapter (14b) to the wiper blade adapter (16b), **characterized in that** the spray unit (22b) has at least one spray channel connection element (30b), which is connected at least partially to at least the coupling element (26b) on the wiper blade adapter (16b) and is provided for at least partially automatic coupling to a further spray channel connection element (28b) on the wiper arm adapter (14b), and wherein the heating unit (18b) has a heating element (52b), which is arranged in the wiper blade adapter (16b), and a heating connection element (50b), which is arranged partially in the coupling element (24b) of the wiper arm adapter (14b).

2. Windscreen wiper (12b) having a windscreen wiper device (10b) according to one of the preceding claims.

3. Method for installing a windscreen wiper device (10b) according to either of Claims 1 and 2.

## Revendications

1. Dispositif d'essuie-glace (10b) destiné à un essuie-glace (12b), ledit dispositif comprenant au moins un adaptateur de bras d'essuie-glace (14b), au moins un adaptateur de balai d'essuie-glace (16b) et une unité de chauffage (18b) destinée à chauffer un balai d'essuie-glace (20b) et une unité de pulvérisation (22b) destinée à pulvériser un fluide de lavage sur une vitre de véhicule, l'unité de pulvérisation (22b) et l'unité de chauffage (18b) étant disposées au moins en partie dans l'adaptateur de balai d'essuie-glace (16b), l'adaptateur de bras d'essuie-glace (14a; 14b) et l'adaptateur de balai d'essuie-glace (16a; 16b) comportant des éléments d'accouplement (24b, 26b) qui sont prévus pour accoupler latéralement l'adaptateur de bras d'essuie-glace (14b) à l'adaptateur de balai d'essuie-glace (16b), **caractérisé en ce que** l'unité de pulvérisation (22b) comporte au moins un élément de raccordement de canal de pulvérisation (30b) qui est au moins partiellement relié à au moins l'élément d'accouplement (26b) au niveau de l'adaptateur de balai d'essuie-glace (16b) et qui est prévu pour l'accouplement au moins partiellement automatique à un autre élément de raccordement de canal de pulvérisation (28b) au niveau de l'adaptateur de bras d'essuie-glace (14b), et l'unité de chauffage (18b) comportant un élément chauffant (52b) disposé dans l'adaptateur de balai d'essuie-glace (16b) et un élément de raccordement chauffant (50b) partiellement disposé dans l'élément d'accouplement (24b) de l'adaptateur de bras d'essuie-glace (14b).

2. Essuie-glace (12b) comprenant un dispositif d'essuie-glace (10b) selon l'une des revendications précédentes.

3. Procédé de montage d'un dispositif d'essuie-glace (10b) selon l'une des revendications 1 à 2.
